# EUROPEAN PATENT APPLICATION

(11) **EP 4 831 823 A1**
(43) Date of publication of application: **28.10.2026**
(21) Application number: 24918380.7
(22) Date of filing: 31.12.2024
(51) Int. Cl.: G06F 16/13

(54) **QUERY METHOD AND APPARATUS, AND DEVICE**

(30) Priority: 16.01.2024 CN 202410065191
(71) Applicant: Huawei Technologies Co., Ltd., Shenzhen, Guangdong 518129 (CN)
(72) Inventor: WANG, Hui, Shenzhen, Guangdong 518129 (CN); JIA, Zhengping, Shenzhen, Guangdong 518129 (CN); WANG, Yan, Shenzhen, Guangdong 518129 (CN)
(74) Representative: Gill Jennings & Every LLP
(86) International application number: PCT/CN2024/144573
(87) International publication number: WO 2025/152772

(57) **Abstract**

A query method and apparatus, and a device are provided. In this application, a query request is received, where the query request is used to obtain a query target from a file system. The query statement includes either data in the query target or a path of the query target, and the query statement includes a wildcard. A prefix compression index is queried based on the query statement to determine an identifier of the query target. The prefix compression index records an identifier of a file or an identifier of a directory, and the file or the directory meets any one of the following conditions: a path of the file or the directory includes a directory-file combination, and the file or the directory includes a character combination. The identifier of the query target is obtained from the prefix compression index based on the query statement, and the query target is obtained based on the identifier of the query target and is fed back to the user. The prefix compression index corresponds to composite data rather than single words. This enables direct locating of a specific prefix compression index using the query statement, thereby reducing the possibility of noise in the query process and improving query accuracy.

## Description

### CROSS-REFERENCE TO RELATED APPLICATIONS

This application claims priority to Chinese Patent Application No. 202410065191.3, filed with the China National Intellectual Property Administration on January 16, 2024 and entitled "QUERY METHOD AND APPARATUS, AND DEVICE", which is incorporated herein by reference in its entirety.

### TECHNICAL FIELD

This application relates to the field of communication technologies, and in particular, to a query method and apparatus, and a device.

### BACKGROUND

With the continuous improvement of storage capability in compute devices, the volume of data stored in the compute devices has grown significantly. Consequently, the scale of metadata that needs to be managed has also increased, making data queries more complex.

Currently, the common data query approach is full-text search. Full-text search is usually performed by constructing inverted lists at the word level, where each word corresponds to an inverted list, recording one or more files containing that word. When querying a file, a user may provide a statement that must be included in the file. The statement is tokenized into one or more words, and the inverted lists corresponding to these words are retrieved. An intersection of the inverted lists is then performed to obtain files containing the words, where the files are identified as query targets. Although this manner improves file query efficiency to some extent, the file query result may contain substantial noise, causing low accuracy.

### SUMMARY

Embodiments of this application provide a query method and apparatus, and a device, to improve query accuracy.

According to a first aspect, an embodiment of this application further provides a query method, and the query method may be performed by a query apparatus. The query apparatus may receive a query request. The query apparatus may be triggered by a user. The query request is used to obtain a query target from a file system. The query target may be a target file or a target directory. The query request carries a query statement, the query statement includes data in the query target or a path of the query target, and the query statement includes a wildcard.

After receiving the query request, the query apparatus queries a prefix compression index based on the query statement to determine an identifier of the query target. The prefix compression index is an index provided in this embodiment of this application. Any prefix compression index corresponds to one directory-file combination or character combination, the directory-file combination includes at least one file name and at least one directory name, or includes at least two directory names, and the character combination includes at least two characters.

The prefix compression index records an identifier of a file or an identifier of a directory, and the file or the directory meets any one of the following conditions: a path of the file includes a directory-file combination, a path of the directory includes the directory-file combination, the file includes a character combination, and the directory includes the character combination.

After the query statement is processed, the directory-file combination or the character combination may be formed. The query apparatus may obtain the identifier of the query target from the prefix compression index based on the query statement. In other words, the identifier of the file that is recorded in the prefix compression index includes an identifier of a target file, or the identifier of the directory that is recorded in the prefix compression index includes an identifier of a target directory. Then, the query target is obtained by using the identifier of the query target and fed back to the user.

According to the foregoing method, an index queried by the query apparatus corresponds to composite data rather than single words. When determining the query target by using a prefix compression index, the query apparatus directly locates one or more specific prefix compression indexes by using the query statement, to obtain the identifier of the query target, and does not need to perform intersection on a plurality of inverted lists, thereby reducing the possibility of noise in the query process and improving query accuracy.

In a possible implementation, the query apparatus may further obtain first configuration information, where the first configuration information indicates an information type included in metadata, and the information type included in the metadata includes all or part of the following: an identifier of a file, a path of a file, an identifier of a directory, and a path of a directory; and the query apparatus may store metadata of the file or the directory based on the first configuration information.

According to the foregoing method, the query apparatus may adjust, based on the indication of the first configuration information, the information type included in the metadata, to ensure that some required specific types of metadata can be stored, and another type of metadata that is not involved in the first configuration information may not be stored. This can effectively use storage space and increase utilization of storage resources.

In a possible implementation, the query apparatus may further obtain second configuration information, where the second configuration information indicates to enable the prefix compression index; and when determining, based on the second configuration information, that the prefix compression index needs to be enabled, the query apparatus may construct the prefix compression index based on the second configuration information and the stored metadata of the file or the directory.

According to the foregoing method, the query apparatus constructs the prefix compression index only when determining that the prefix compression index needs to be enabled. Index construction is flexible, and the prefix compression index may be selected to be constructed or not constructed according to an actual requirement.

In a possible implementation, the second configuration information may further indicate a maximum quantity of levels of the prefix compression index, and the maximum quantity of levels of the prefix compression index describes a total quantity of directory names and file names in the directory-file combination, or describes a total quantity of characters in the character combination.

According to the foregoing method, because one prefix compression index corresponds to one directory-file combination or character combination, a quantity of directory-file combinations or character combinations determines a quantity of prefix compression indexes, and a maximum quantity of levels of the prefix compression index can effectively restrict a quantity of constructed prefix compression indexes, thereby avoiding occupation of excessive storage space by the prefix compression indexes.

In a possible implementation, the prefix compression index includes at least one index entry.

For any index entry, when the index entry includes an identifier of one file, the index entry further includes a position of a file name of the file in a path of the file. Optionally, the index entry further includes a position of another file name or directory name in the directory-file combination in the path of the file.

When the index entry includes an identifier of one directory, the index entry further includes a position of a directory name of the directory in a path of the directory. Optionally, the index entry further includes a position of another file name or directory name in the directory-file combination in the path of the directory.

According to the foregoing method, the prefix compression index has a simple structure, so that the query apparatus can accurately determine the identifier of the query target from the prefix compression index.

In a possible implementation, the prefix compression index includes at least one index entry.

For any index entry, when the index entry includes an identifier of one file, the index entry further includes a position, in the file, of one or more characters in the character combination.

According to the foregoing method, the prefix compression index has a simple structure, so that the query apparatus can locate the identifier of the query target from the prefix compression index.

In a possible implementation, in a scenario of querying a file by using a file path or querying a directory path by using a directory path, when the query apparatus queries the prefix compression index to determine the identifier of the query target, the query apparatus may determine a target prefix compression index from the prefix compression index based on the query statement, where the query statement includes a target directory-file combination corresponding to the target prefix compression index.

Then, the query apparatus determines a first target index entry from the target prefix compression index based on the query statement.

If the first target index includes an identifier of a target file, the identifier of the query target is the identifier of the target file, and for a file name or a directory name included in the target directory-file combination, the first target index entry and the query statement meet all or part of the following:

First position information included in the first target index entry is consistent with a position of the file name in the query statement, where the first position information is a position of the file name in a path of the target file.

Second position information included in the first target index entry is consistent with a position of the directory name in the query statement, where the second position information is a position of the directory name in the path of the target file.

If the first target index includes an identifier of a target directory, the identifier of the query target is the identifier of the target directory, and for a file name or a directory name included in the target directory-file combination, the first target index entry and the query statement meet all or part of the following:

Third position information included in the first target index entry is consistent with a position of the file name in the query statement, where the first position information is a position of the file name in a path of the target directory.

Fourth position information included in the first target index entry is consistent with a position of the directory name in the query statement, where the fourth position information is a position of the directory name in the path of the target directory.

According to the foregoing method, the target prefix compression index can be accurately determined by using the query statement, and the first target index entry can be accurately determined by using a position of a file name and a position of a directory name in the query statement. In an entire query process, intersection does not need to be performed on prefix compression indexes, thereby reducing noise that may exist in the query process and ensuring query accuracy.

In a possible implementation, in a scenario of querying a file by using data in the file, when the query apparatus queries the prefix compression index to determine the identifier of the query target, the query apparatus may determine a target prefix compression index from the prefix compression index based on the query statement, where the query statement includes a target character combination corresponding to the target prefix compression index.

Then, the query apparatus determines a first target index entry from the target prefix compression index based on the query statement.

If the first target index includes an identifier of a target file, the identifier of the query target is the identifier of the target file, and for a character included in the target character combination, the first target index entry and the query statement meet the following:
Position information included in the first target index entry is consistent with a position of the character in the query statement, where the position information is a position of the character in the target file.

According to the foregoing method, the target prefix compression index can be accurately determined by using the query statement, and the first target index entry can be accurately determined by using a position of a character in the query statement. In an entire query process, intersection does not need to be performed on prefix compression indexes, thereby reducing noise that may exist in the query process and ensuring query accuracy.

In a possible implementation, in addition to determining the identifier of the query target by using the prefix compression index, the query apparatus may further determine the query target by using an inverted list. A specific process is as follows:

The query apparatus may query an inverted list based on the query statement to determine inverted lists corresponding to words in the query statement.

The query apparatus determines, based on the inverted lists corresponding to the words, candidate targets included in all the inverted lists corresponding to the words.

The query apparatus determines the query target from the candidate targets based on positions, in the query statement, of the words in the query statement and positions, in the candidate targets, of the words recorded in the inverted lists corresponding to the words.

The query apparatus feeds back the query target to the user.

According to the foregoing method, when determining the query target by using the inverted lists, the query apparatus performs intersection on the inverted lists, and further determines the query target from the candidate targets by using the positions of the words in the query statement, that is, performs screening after performing intersection on the inverted lists, to ensure that the query target can be accurately located finally, thereby ensuring that the correct query target can be fed back to the user.

In a possible implementation, for a word in the query statement, the query target meets the following:

A position of the word in the query statement is the same as a position, in the query target, of the word recorded in the inverted list corresponding to the word.

According to the foregoing method, a position of a word in the query target is consistent with that recorded in an inverted list, to ensure that the determined query target is a correct file or directory that the user needs to query.

In a possible implementation, before querying the prefix compression index based on the query statement of the query target to determine the identifier of the query target, the search apparatus may further perform screening, to ensure that the query statement meets all or part of the following:
1. An occurrence frequency, in the query statement, of a word in the query statement is not greater than a maximum occurrence frequency of the word.
2. A length of the query statement is not greater than a maximum length of data in a file or a maximum length of a path.
3. A position of the word in the query statement is consistent with a preset position of the word.

According to the foregoing method, screening is performed before the prefix compression index is queried, so that some query requests that cannot be processed can be rejected in advance, thereby ensuring query efficiency.

According to a second aspect, an embodiment of this application further provides a query method, and the query method may be performed by a query apparatus. For beneficial effects, refer to the related descriptions of the first aspect. Details are not described herein again.

The query apparatus may query an inverted list based on a query statement to determine inverted lists corresponding to words in the query statement. The query apparatus determines, based on the inverted lists corresponding to the words, candidate targets included in all the inverted lists corresponding to the words. The query apparatus determines a query target from the candidate targets based on positions, in the query statement, of the words in the query statement and positions, in the candidate targets, of the words recorded in the inverted lists corresponding to the words. The query apparatus feeds back the query target to a user.

In a possible implementation, for a word in the query statement, the query target meets the following:
A position of the word in the query statement is the same as a position, in the query target, of the word recorded in the inverted list corresponding to the word.

In a possible implementation, the query apparatus receives third configuration information, where the third configuration information indicates not to enable a prefix compression index. The query apparatus constructs an inverted list based on metadata of a file or a directory. When it is determined that the prefix compression index is not enabled, the inverted list is constructed, to ensure that a file or a directory can be queried by using the inverted list subsequently.

According to a third aspect, an embodiment of this application further provides a query apparatus. The query apparatus has functions of implementing behavior in the method instance according to the first aspect or the second aspect. For beneficial effects, refer to the descriptions of the first aspect. Details are not described herein again. The functions may be implemented by hardware, or may be implemented by hardware executing corresponding software. The hardware or the software includes one or more modules corresponding to the foregoing functions. In a possible design, a structure of the apparatus includes a receiving module, an index module, and a feedback module, and optionally, further includes a data processing module. These modules may perform corresponding functions in the method example according to the first aspect. For details, refer to the detailed descriptions in the method example. Details are not described herein again.

According to a fourth aspect, this application further provides a compute device. The compute device includes a processor and a storage, and may further include a communication interface. The processor executes program instructions in the storage to perform the method according to any one of the first aspect or the possible implementations of the first aspect. Alternatively, the processor executes program instructions in the storage to perform the method according to any one of the second aspect or the possible implementations of the second aspect. The storage is coupled to the processor, and stores computer program instructions and data that are required for determining an exception detection process.

The communication interface is configured to communicate with another device, for example, obtain a query request, first configuration information, second configuration information, and third configuration information, and feed back a query target.

According to a fifth aspect, this application further provides a compute device. The compute device includes an acceleration apparatus and a processor, and optionally, may further include a storage and a communication interface. The processor and the acceleration apparatus cooperate to perform the method according to any one of the first aspect or the possible implementations of the first aspect. Alternatively, the acceleration apparatus performs the method according to any one of the first aspect or the possible implementations of the first aspect. The storage is coupled to the processor, and stores some computer program instructions and data that are required for determining a query process.

The communication interface is configured to communicate with another device, for example, obtain a query request, first configuration information, second configuration information, and third configuration information, and feed back a query target.

Alternatively, the processor and the acceleration apparatus are configured to perform the method according to any one of the second aspect or the possible implementations of the second aspect. Alternatively, the acceleration apparatus performs the method according to any one of the second aspect or the possible implementations of the second aspect.

The communication interface is configured to communicate with another device, for example, obtain a query request and third configuration information, and feed back a query target.

According to a sixth aspect, this application provides a compute device system. The compute device system includes at least one compute device. Each compute device includes a storage and a processor. The processor of the at least one compute device is configured to access code in the storage to perform the method according to any one of the first aspect or the possible implementations of the first aspect, or the processor of the at least one compute device is configured to access code in the storage to perform the method according to any one of the second aspect or the possible implementations of the second aspect.

According to a seventh aspect, this application provides a computer-readable storage medium. When the computer-readable storage medium is executed by a compute device, the compute device performs the method according to any one of the first aspect or the possible implementations of the first aspect, or performs the method according to any one of the second aspect or the possible implementations of the second aspect. The storage medium stores computer program instructions. The storage medium includes but is not limited to a volatile memory, for example, a random access memory, and a non-volatile memory, for example, a flash memory, a hard disk drive (hard disk drive, HDD), or a solid-state drive (solid-state drive, SSD).

According to an eighth aspect, this application provides a compute device program product. The compute device program product includes computer program instructions. When the computer program instructions are executed by a compute device, the compute device performs the method according to any one of the first aspect or the possible implementations of the first aspect, or performs the method according to any one of the second aspect or the possible implementations of the second aspect. The computer program product may be a software installation package. When the method according to any one of the first aspect or the possible implementations of the first aspect needs to be used or the method according to any one of the second aspect or the possible implementations of the second aspect needs to be used, the computer program product may be downloaded and the computer program product is executed on the compute device.

According to a ninth aspect, this application further provides a computer chip. The chip is connected to a storage, and the chip is configured to read and execute computer program instructions stored in the storage, to perform the method according to the first aspect and the possible implementations of the first aspect, or perform the method according to the second aspect and the possible implementations of the second aspect.

### BRIEF DESCRIPTION OF DRAWINGS

FIG. 1 is a diagram of a structure of a query system according to this application;
FIG. 2 is a flowchart of a query method according to this application;
FIG. 3A to FIG. 3D are diagrams of information configuration interfaces according to this application;
FIG. 4 is a diagram of a compute device according to this application;
FIG. 5 is a diagram of a structure of a query apparatus according to this application; and
FIG. 6 and FIG. 7 are diagrams of structures of compute devices according to embodiments of this application.

### DESCRIPTION OF EMBODIMENTS

Before a query method and apparatus, and a device provided in embodiments of this application are described, some concepts in embodiments of this application are first clarified.

### (1) File system

The file system is a structured data storage and organization form. The file system uses a concept of "file" to organize data in a compute device, and is used for data of a same purpose. Different types of files are formed based on structures required by different application programs. Generally, different suffixes indicate different types, and each file is provided with a name that is easy to remember, that is, "file name". When there are many files, these files are grouped in a specific manner, and each group of files is placed in a same directory (or referred to as a folder). In addition to the files, the directory may further include a lower-level directory (referred to as a subdirectory or a subfolder). All files and directories form a tree structure. The tree structure has a dedicated name: file system (file system). There are many types of file systems, and common file systems are FAT/FAT32/NTFS in Windows, EXT2/EXT3/EXT4/XFS/BtrFS in Linux, and the like. To facilitate searching, starting from a root node down to a file level by level in terms of directories, directory names, subdirectory names, and file names are concatenated by using special characters (for example, "\" in Windows/DOS and "/" in Unix-like systems), and such a character string is referred to as a file path, for example, "/etc/systemd/system.conf" in Linux or "C:\Windows\System32\taskmgr.exe" in Windows. A file path is a unique identifier for accessing a specific file. For example, D:\data\file.exe in Windows is a file path, and indicates a file "file.exe" in a directory "data" in a partition D. Similar to a file, a directory may be understood as a special "file", the directory also has a directory path, and the directory path is directory locating information. In embodiments of this application, special characters for connecting a directory name, a subdirectory name, and a file name in a directory path or a file path are referred to as separators. A specific form of the separator is not limited in embodiments of this application.

### (2) Inverted list

The inverted list is also referred to as an inverted index or a reverse index. The inverted list may be used in a scenario of searching for a record by using a value of a property. A record may be understood as a carrier of one or more properties. Meanings of a record and a property may vary with a scenario of searching for the record. For example, in a scenario of searching for a file by using data in the file, a record may be a file, and a property is data in the file (for example, one or more words or one or more statements in the file). For another example, in a scenario of searching for a directory by using a directory path or searching for a file by using a file path, a record may be understood as a directory path or a file path, and a property is a directory name, a subdirectory name, or a file name in the directory path or the file path.

In an inverted list, an index is constructed by using a value of a property as a keyword, and the inverted list can indicate a record that includes the value of the property. A specific presentation form of the inverted list is not limited in embodiments of this application.

The following lists two presentation manners of the inverted list:

### (1) Bitmap (bitmap)

The bitmap includes a plurality of bits, each bit corresponds to one record (for example, in a file system scenario, the record may be understood as a file or a directory), and a value of each bitmap indicates whether a corresponding record includes the value of the property.

For example, in a scenario of querying a file by using data in the file, bitmaps may be created for data in some files, and different data may correspond to different bitmaps. A bitmap corresponding to any piece of data includes a plurality of bits, a quantity of bits may be the same as a quantity of files in a file system, each bit corresponds to one file, and a value of the bit indicates whether the corresponding file includes the data. For example, if the value of the bit is 1, it indicates that the corresponding file includes the data; and if the value of the bit is 0, it indicates that the corresponding file does not include the data.

For another example, in a scenario of searching for a directory by using a directory path or searching for a file by using a file path, bitmaps may be created for some directory names, subdirectory names, or file names, and different directory names (subdirectory names or file names) may correspond to different bitmaps. A bitmap corresponding to any directory name includes a plurality of bits, a quantity of bits may be the same as a total quantity of files and directories in a file system, each bit corresponds to one file or directory, and a value of the bit indicates whether a path of the corresponding file or directory includes the directory name. For example, if the value of the bit is 1, it indicates that the path of the corresponding file or directory includes the directory name; and if the value of the bit is 0, it indicates that the path of the corresponding file or directory does not include the directory name.

### (2) Skip list

The skip list includes related information of a "record" that includes the value of the property. In other words, the skip list carries only the related information of the record that includes the value of the property, and does not carry related information of a record that does not include the value of the property. The skip list created for the value of the property includes a plurality of index entries, and a quantity of index entries is the same as a quantity of records that include the value of the property. Each index entry may include identification information of the record. Optionally, each index entry may further include a position of the property in the record.

For example, in a scenario of querying a file by using data in the file, skip lists may be created for data in some files, and different data may correspond to different skip lists. A skip list corresponding to any piece of data records a file identifier of a file, and optionally, further records a position of the data in the file. For another example, in a scenario of searching for a directory by using a directory path or searching for a file by using a file path, skip lists may be created for some directory names, subdirectory names, or file names, and different directory names (subdirectory names or file names) may correspond to different skip lists. A skip list corresponding to any directory name records a directory identifier, and optionally, may further record a position of the directory name in one or more directory paths. Alternatively, the skip list records a file identifier, and optionally, may further record a position of the directory name within one or more file paths. The directory identifier and the file identifier are information for identifying a directory and a file, and are information required for obtaining the directory and the file. During actual application, the directory identifier and the file identifier may also be replaced with other information required for obtaining the directory and the file.

An inverted index applicable to a scenario of searching for a directory by using a directory path or searching for a file by using a file path is used as an example below to describe a structure of a skip list.

It is assumed that the file system includes four files, and file paths of the four files are respectively as follows:
File 1: /abc/bcd/def/efg.
File 2: /abc/def/efg/bcd.
File 3: /def/efg/abc/bcd.
File 4: /def/efg/abc/bcd.

In this case, there may be four inverted lists, and the four inverted lists are respectively as follows:
Skip list 1 (a corresponding directory name or file name is abc): 1/1, 2/1, 3/3, and 4/2.
Skip list 2 (a corresponding directory name or file name is bcd): 1/2, 2/4, 3/4, and 4/3.
Skip list 3 (a corresponding directory name or file name is def): 1/3, 2/2, 3/1, and 4/1.
Skip list 4 (a corresponding directory name or file name is efg): 1/4, 2/3, 3/2, and 4/4.

In each index entry in the skip list, "/" is used to separate a file identifier and a position, in the file path, of the directory name or file name corresponding to the skip list. Content before "/" is the file name, and content after "/" is the position, in the file path, of the directory name or file name corresponding to the skip list.

It should be noted that a specific presentation manner of the index entry in the skip list in the foregoing example is merely an example. A presentation manner of the index entry is not limited in embodiments of this application. Any manner that can record the file identifier and the position, in the file path, of the directory name or file name corresponding to the skip list is applicable to embodiments of this application.

### (3) Prefix compression index and quantity of levels of the prefix compression index

Embodiments of this application provide an index constructed based on a path (for example, a file path or a directory path). For ease of description, the index is referred to as a prefix compression index.

The prefix compression index may be used in a scenario of searching for a record by using values of a plurality of properties. For descriptions of the property and the record, refer to the foregoing content. Details are not described herein again.

Different prefix compression indexes may be set for different property combinations, and the property combination includes values of a plurality of properties. A prefix compression index of one property combination indicates a record that includes the property combination. A specific presentation form of the prefix compression index is not limited in embodiments of this application.

Similar to the inverted list, the prefix compression index may also be presented in a form of a bitmap or a skip list.

### (1) Bitmap (bitmap)

The bitmap includes a plurality of bits, each bit corresponds to one record (for example, in a file system scenario, the record may be understood as a file or a directory), and a value of each bitmap indicates whether a corresponding record includes the property combination.

For example, in a scenario of querying a file by using data in the file, bitmaps may be created for some characters in the file (the characters herein represent some specific data included in the file or a single character formed after the data in the file is tokenized, for example, a word, a character, or a symbol included in the file), and different character combinations may correspond to different bitmaps. One character combination includes a plurality of characters. A bitmap corresponding to any character combination includes a plurality of bits, a quantity of bits may be the same as a quantity of files in a file system, each bit corresponds to one file, and a value of the bit indicates whether the corresponding file includes the character combination. For example, if the value of the bit is 1, it indicates that the corresponding file includes the character combination; and if the value of the bit is 0, it indicates that the corresponding file does not include the character combination.

It should be noted that a specific form of any character in the character combination is not limited in embodiments of this application. For example, the character may be a letter, an English word, a Chinese character, a Chinese phrase, a punctuation, or a Greek symbol.

For another example, in a scenario of searching for a directory by using a directory path or searching for a file by using a file path, bitmaps may be created for some directory names, subdirectory names, or file names, and different directory-file combinations may correspond to different bitmaps. The directory-file combination may include a plurality of directory names, or may include at least one directory name and at least one file name.

A bitmap corresponding to any directory-file combination includes a plurality of bits, a quantity of bits may be the same as a total quantity of files and directories in a file system, each bit corresponds to one file or directory, and a value of the bit indicates whether a path of the corresponding file or directory includes a directory name. For example, if the value of the bit is 1, it indicates that the path of the corresponding file or directory includes the directory name; and if the value of the bit is 0, it indicates that the corresponding file or directory does not include the directory name.

### (2) Skip list

The skip list includes related information of a "record" that includes the property combination. In other words, the skip list carries only the related information of the "record" that includes the property combination, and does not carry related information of a "record" that does not include the property combination. The skip list created for the property combination includes a plurality of index entries, and a quantity of index entries is the same as a quantity of "records" that include the property combination. For example, each index entry may include identification information of the record. Optionally, each index entry may further include positions, in the record, of some or all properties in the property combination.

For example, in a scenario of querying a file by using data in the file, skip lists may be created for character combinations in some files, and different character combinations may correspond to different skip lists. A skip list corresponding to any character combination records a file identifier of a file, and optionally, further records a position, in the file, of one or more characters in the character combination. For another example, in a scenario of searching for a directory by using a directory path or searching for a file by using a file path, skip lists may be created for directory-file combinations, and different directory-file combinations may correspond to different skip lists. A skip list corresponding to any directory-file combination records a directory identifier and a position, in one or more directory paths, of a part or all of the directory-file combination, or the skip list records a file identifier and/or a position, in one or more file paths, of a part or all of the directory-file combination. The directory identifier and the file identifier are information for identifying a directory and a file, and are information required for obtaining the directory and the file. During actual application, the directory identifier and the file identifier may also be replaced with other information required for obtaining the directory and the file.

It is noted that a subdirectory is a special "directory" that is a relative concept for describing a structure of a directory, and the subdirectory is a lower-level "directory" included in the directory.

The quantity of levels of the prefix compression index describes a quantity of corresponding properties. A value of the quantity of levels of the prefix compression index is not limited in embodiments of this application. For example, the quantity of levels of the prefix compression index is equal to a quantity of properties recorded by the prefix compression index. For another example, the quantity of levels of the prefix compression index is equal to a quantity of properties recorded by the prefix compression index minus 1. When the quantity of levels of the prefix compression index is equal to 0, the prefix compression index is the foregoing inverted list.

A prefix compression index applicable to a scenario of searching for a directory by using a directory path or searching for a file by using a file path is used as an example below to describe a structure and a quantity of levels of a prefix compression index presented in a form of a skip list.

The foregoing four files are still used as an example.

If the quantity of levels of the prefix compression index is equal to the quantity of properties recorded by the prefix compression index minus 1, a maximum quantity of levels of the prefix compression index is 3. In a directory name or file name corresponding to the prefix compression index, "/*/" indicates any character. A structure of the index entry in the prefix compression index is similar to that of the index entry in the foregoing inverted list. The following only uses an example in which the index entry records only a position, in a file path, of a last directory name in the directory-file combination corresponding to the prefix compression index. Similarly, a specific structure of the index entry in the prefix compression index is not limited in embodiments of this application.

There are a plurality of level-1 prefix compression indexes, two of which are listed as follows:
Level-1 prefix compression index 1 (a corresponding directory-file combination is abc/*/bcd): 1/2 and 2/4.

Level-1 prefix compression index 2 (a corresponding directory-file combination is def/*/bcd): 3/4 and 4/3.

There are a plurality of level-2 prefix compression indexes, one of which is listed as follows:
Level-2 prefix compression index 1 (a corresponding directory-file combination is abc/bcd/*/efg): 1/4 and 2/3.

There is one level-3 prefix compression index, which is listed as follows:
Level-3 prefix compression index 1 (a corresponding directory-file combination is abc/bcd/def/efg): 1/4.

It can be learned from the foregoing descriptions that, actually, if storage space occupied by a prefix compression index is not considered, a quantity of the foregoing compression indexes of different levels is related to a quantity of directory-file combinations that can be constructed. If storage space occupied by a prefix compression index is considered, a quantity of the foregoing compression indexes of different levels may be reduced according to an actual requirement. For example, a directory-file combination corresponding to the foregoing compression index definitely includes a root directory, so that a prefix compression index corresponding to a directory-file combination that does not include a root directory does not need to be constructed.

### (4) Metadata (metadata)

The metadata, also referred to as mediation data or trunk data, is data about data (data about data), and is mainly information describing data properties (property), for example, a data address, a data modification record, a data size, and a data creation date.

Herein, an example in which data is stored and organized in a form of a file system is used. Metadata in the file system includes metadata of a file, metadata of a directory, and the like.

The metadata of the file describes properties of data in the file, for example, a file name, a file path (which may also be understood as a file address), a data modification record, a file size, and a file identifier. The metadata of the directory describes property information of the directory, for example, a directory name, a directory modification record, a directory path, a directory identifier (identifier, ID), a directory creation time, a directory modification time, an access time, and a group to which the directory belongs.

In embodiments of this application, a user is allowed to define an information type included in metadata, and a query apparatus can organize and store the metadata based on the information type defined by the user.

### (5) Tokenization

During file or directory query, information that is related to a query target and that is carried in a query request (the information related to the query target is referred to as a query statement in embodiments of this application) usually needs to be first tokenized, that is, the query statement carried in the query request is tokenized at a word granularity to convert the query statement into one or more words. A case in which the query statement is converted into one word is a special "tokenization" case. Generally, the information that is related to the query target and that is carried in the query request includes few words (for example, includes only one character), and cannot be further tokenized.

The query statement includes but is not limited to data in the query target and a path of the query target.

Generally, the path of the query target includes a separator, and each directory name or file name separated by the separator may be understood as a token. For the data (which may include a wildcard) in the query target that is carried in the query request, the data in the query target needs to be tokenized. For example, if the query statement carried in the query request is "apple tree", "apple tree" may be tokenized into "apple", "tree", "app", "ppl", and the like.

It should be noted that, in embodiments of this application, a word and a character formed after tokenization are not particularly distinguished. A word formed after tokenization may be understood as a character, and a character may be represented as a word. In embodiments of this application, a word and a character represent a same meaning. Generally, "word" is used in descriptions of a process of tokenizing data or querying an inverted list, and "character" is used in descriptions of the foregoing compression index.

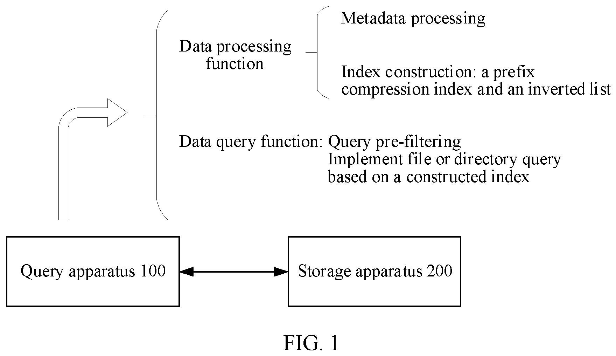

FIG. 1 is a diagram of a structure of a query system according to an embodiment of this application. The query system includes a query apparatus 100 and a storage apparatus 200.

The query apparatus 100 can interact with a user, can store metadata of data (for example, metadata of a file or metadata of a directory) in the storage apparatus 200 based on an indication of the user, and can further process a query request triggered by the user, and query a file or a directory in the storage apparatus 200 based on a pre-constructed inverted list and/or prefix compression index.

Function 1: The query apparatus 100 has a data processing function.

The data processing function of the query apparatus 100 is mainly represented in metadata processing and index construction.

### (1) Metadata processing

The query apparatus 100 is user-oriented and allows the user to configure, according to a requirement of the user, an information type included in the metadata. After obtaining the information type that is included in the metadata and that is configured by the user, the query apparatus 100 processes the metadata of the data, where an information type included in processed metadata is consistent with the information type that is included in the metadata and that is configured by the user. The query apparatus 100 may store the processed metadata in the storage apparatus 200.

### (2) Index construction

After processing the metadata, the query apparatus 100 may further construct an index based on the metadata. In embodiments of this application, the query apparatus 100 may construct two types of indexes: an inverted index and a prefix compression index.

It can be learned from the foregoing descriptions of the inverted index and the prefix compression index that the inverted index and the prefix compression index are applicable to different query scenarios. The inverted index includes different content in different query scenarios, and the prefix compression index also includes different content in different query scenarios.

When constructing an index, the query apparatus 100 may construct not only an inverted index and a prefix compression index that are applicable to a scenario of searching for a file by using data in the file, but also an inverted index and a prefix compression index that are applicable to a scenario of searching for a directory by using a directory path or searching for a file by using a file path.

Characters, in a file, corresponding to the inverted index and the prefix compression index that are applicable to a scenario of searching for a file by using data in the file may be different or not completely the same. For example, the inverted index corresponds to only one character in the file, and the prefix compression index corresponds to a character combination, where the character combination includes at least two characters.

File names or directory names corresponding to the inverted index and the prefix compression index that are applicable to a scenario of searching for a directory by using a directory path or searching for a file by using a file path may be different or not completely the same. For example, the inverted index corresponds to only one directory name or one file name in a file system, and the prefix compression index corresponds to a directory file name combination, where the directory file name combination includes at least two directory names in the file system or at least one directory name and at least one file name in the file system.

When constructing an index, the query apparatus 100 may construct an inverted index applicable to a scenario of searching for a file by using data in the file, and construct a prefix compression index applicable to a scenario of searching for a directory by using a directory path or searching for a file by using a file path.

In addition, when constructing a prefix compression index, the query apparatus 100 may respectively construct prefix compression indexes in forms of a bitmap and a skip list, or may construct a prefix compression index in a form of a bitmap or a skip list. Similarly, when constructing an inverted list, the query apparatus 100 may respectively construct inverted lists in forms of a bitmap and a skip list, or may construct an inverted list in a form of a bitmap or a skip list.

Function 2: The query apparatus 100 has a data query function.

The query apparatus 100 can process a query request triggered by a user, where the query request is used to request to query a target directory or a target file. For ease of description, the target directory or the target file that the query request is used to request to query is referred to as a query target. The query request may carry data in the query target or a path of the query target.

It should be noted that, in embodiments of this application, the query apparatus 100 supports fuzzy query, that is, the data in the query target or the path of the query target that may be carried in the query request may include a wildcard. The wildcard may replace any character. A specific form of the wildcard is not limited in embodiments of this application. For example, the wildcard may be "?", "*", or a space. In other words, the data in the query target that may be carried in the query request may be incomplete data, and the path of the query target that is carried in the query request may be an inaccurate path. Therefore, in embodiments of this application, the query apparatus 100 can find the query target by using incomplete data and an inaccurate path. When the query request may carry an accurate path, the query apparatus 100 may directly find the query target based on the accurate path. When the query request may carry complete data (that is, data that does not include a wildcard) in a file, the query apparatus 100 may not tokenize the data, but directly perform index query based on the complete data, to determine an identifier of the query target, and further find the query target.

After receiving the query request, the query apparatus 100 may search for the query target based on a constructed index. When the query request carries the data in the query target, the query apparatus 100 may query an inverted index or a prefix compression index based on the data in the query target, to determine the path of the query target, and further obtain the query target by using the path. The inverted index or the prefix compression index is an index that is constructed by the query apparatus 100 and that is applicable to a scenario of searching for a file by using data in the file.

When the query request carries the path (for example, a path including a wildcard) of the query target, the query apparatus 100 may query an inverted index or a prefix compression index based on the path of the query target, to determine the identifier of the query target, and further obtain the query target. The inverted index or the prefix compression index is an index that is constructed by the query apparatus 100 and that is applicable to a scenario of searching for a file by using a file path or querying a directory by using a directory path.

In addition, because the query apparatus 100 may construct inverted indexes or prefix compression indexes in forms of a bitmap and a skip list, an example in which inverted lists in forms of a bitmap and a skip list are constructed is used for description in embodiments of this application.

When the inverted list is an index applicable to a scenario of searching for a file by using data in the file, the query apparatus 100 queries the inverted list based on the data in the query target, and the query apparatus 100 may synchronously query a bitmap and a skip list, or may query only a bitmap or a skip list. For example, when the shortest length of the inverted list corresponding to the data in the query target (that is, the shortest length of an inverted list corresponding to a word obtained after the data in the query target is tokenized) is greater than a first threshold, the query apparatus 100 queries the bitmap; or when the shortest length of the inverted list corresponding to the data in the query target is not greater than a first threshold, the query apparatus 100 queries the skip list. A length of an inverted list describes a total quantity of file identifiers and directory identifiers that are recorded in the inverted list.

When the inverted list is an index applicable to a scenario of searching for a file by using a file path or querying a directory by using a directory path, the query apparatus 100 queries the inverted list based on the path of the query target, and the query apparatus 100 may synchronously query a bitmap and a skip list, or may query only a bitmap or a skip list. For example, when the shortest length of the corresponding inverted list in the path of the query target is greater than a second threshold, the query apparatus 100 queries the bitmap; or when the shortest length of the corresponding inverted list in the path of the query target is not greater than a second threshold, the query apparatus 100 queries the skip list.

The query apparatus 100 may further perform query pre-filtering before data query, and "query pre-filtering" means before data query, determining whether the query apparatus can process the query request, or determining whether the query apparatus has the possibility of finding the query target.

In embodiments of this application, the query apparatus 100 may perform "query pre-filtering" in all or part of the following aspects:

### Aspect 1: word frequency.

For any word, an occurrence frequency of the word in a file and an occurrence frequency of the word in a file path (or a directory path) always have maximum values. For example, a maximum quantity of times "apple tree" appears in a file is 10, that is, "apple tree" appears at most 10 times in any one of a plurality of files in the file system. For another example, a maximum quantity of times "create file 1" appears in a file path (or a directory path) is 2, that is, "create file 1" appears at most twice in a path of any file (or directory) in a plurality of files in the file system.

The query apparatus 100 may perform filtering on the query request based on a word frequency, and when determining that any word in the data in the query target or the path of the query target that is carried in the query request is greater than a maximum occurrence frequency of the word, reject the query request and not process the query request. The maximum occurrence frequency of the word is a maximum quantity of times the word appears in a single file in the file system (applicable to a scenario of searching for a file by using data in the file). The maximum occurrence frequency of the word is a maximum quantity of times the token appears in a single file path or directory path in the file system (applicable to a scenario of searching for a directory by using a directory path or searching for a file by using a file path).

### Aspect 2: length of data in a file or length of a directory path (or a file path).

For data in any file (for example, a statement in the file) in the file system, a length of the data always has a maximum value. For a path of any file or a path of any directory in the file system, a length of the directory path (or the file path) always has a maximum value.

If a length of the data in or the path of the query target that is carried in the query request exceeds a corresponding maximum value, the query request may be rejected.

### Aspect 3: word position.

For a word in data in any file (for example, a statement in the file) in the file system, a position of the word in the data is usually fixed. For example, words " 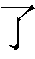 " and " 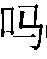 " is always at the end of the data. For a path of any file or a path of any directory in the file system, a directory name or a file name in the directory path (or the file path) is usually at a fixed position. For example, a root directory is always at the beginning of the directory path (or the file path).

If a position of a word in the data in the query target that is carried in the query request is different from a preset position of the word, the query request may be rejected. If a position of a word in the path of the query target that is carried in the query request is different from a preset position of the word, the query request may be rejected. The preset position of the word is a position of the word in data in a file in the file system (applicable to a scenario of searching for a file by using data in the file). The preset position of the word is a position of the word in a file path or a directory path in the file system (applicable to a scenario of searching for a directory by using a directory path or searching for a file by using a file path).

A specific form of the query apparatus 100 is not limited in embodiments of this application. The query apparatus 100 may be a hardware apparatus, and the query apparatus 100 may be a single compute device, or may be a cluster including a plurality of compute devices. Alternatively, the query apparatus 100 may be a hardware component in a compute device, for example, a processor (such as a central processing unit (CPU) or a data processing unit (DPU)), an offloading card, or an acceleration card in the compute device. The query apparatus 100 may be a software apparatus, and the query apparatus 100 may be software configured to manage a file, for example, file management software or database management software.

The storage apparatus 200 is configured to store data and metadata. A specific type of the storage apparatus 200 is not limited in embodiments of this application. The storage apparatus 200 can store data or metadata based on an indication of the query apparatus 100, and can further transmit data to the query apparatus 100 based on an indication of the query apparatus 100. For example, after the query apparatus 100 finds a file or a directory, the storage apparatus 200 may transmit the file or the directory to the query apparatus 100 based on a file identifier or a directory representation. The storage apparatus 200 may be a compute device or a compute device cluster having a storage function, or the storage apparatus 200 may be a component having a storage function in a compute device, for example, a hard disk or a magnetic disk. All apparatuses having a data storage function are applicable to embodiments of this application.

A manner of deploying the storage apparatus 200 and the query apparatus 100 is not limited in embodiments of this application. The storage apparatus 200 and the query apparatus 100 may be deployed in a same compute device. For example, the query apparatus 100 may be a processor (such as a CPU or a DPU) in the compute device, and the storage apparatus 200 is a hard disk in the compute device. The storage apparatus 200 and the query apparatus 100 may be deployed in different compute devices. For example, the storage apparatus 200 and the query apparatus 100 may be deployed in a storage system, the query apparatus 100 is a compute node (having a data computing function and undertaking a compute task in the storage system) in the storage system, and the storage apparatus 200 is a storage node (having a data storage function) in the storage system.

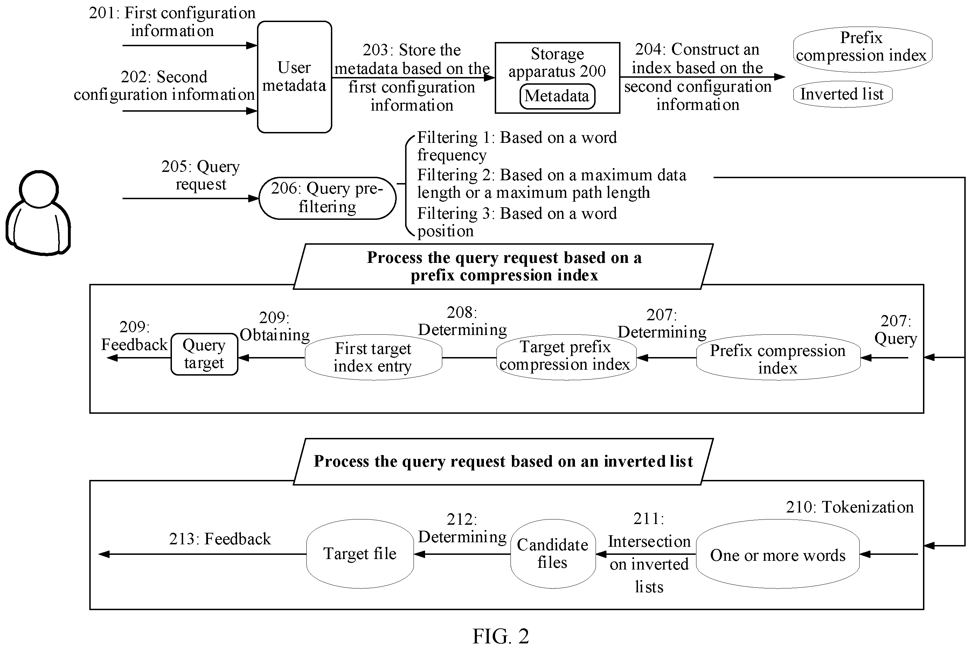

A query method provided in an embodiment of this application is described below with reference to FIG. 2. The query method includes two parts. One part is metadata storage and index construction. For details, refer to step 201 to step 204. The other part is data query. For details, refer to step 205 to step 213.

In this part, two manners may be used for data query. One manner is to implement data query by using a prefix compression index. For details, refer to step 207 to step 209. The other manner is to implement data query by using an inverted list. For details, refer to step 210 to step 213. The two manners are applicable to not only a scenario of searching for a file by using data in the file, but also a scenario of searching for a directory by using a directory path or searching for a file by using a file path. In the embodiment shown in FIG. 2, an example in which data query is performed by using an inverted list in a scenario of searching for a file by using data in the file and data query is performed by using a prefix compression index in a scenario of searching for a directory by using a directory path or searching for a file by using a file path is used for description.

A manner of performing data query by using a prefix compression index in a scenario of searching for a file by using data in the file is similar to a manner of performing data query by using a prefix compression index in a scenario of searching for a directory by using a directory path or searching for a file by using a file path. A difference lies only in that information corresponding to the prefix compression indexes in the two different scenarios is different, the information corresponding to the former scenario (scenario of searching for a file by using data in the file) is a character combination, and the information corresponding to the latter scenario (scenario of searching for a directory by using a directory path or searching for a file by using a file path) is a directory-file combination. Data query principles are similar, and details are not described herein again.

A manner of performing data query by using an inverted list in a scenario of searching for a directory by using a directory path or searching for a file by using a file path is similar to a manner of performing data query by using an inverted list in a scenario of searching for a file by using data in the file. A difference lies only in that information corresponding to the inverted lists in the two different scenarios is different, the information corresponding to the former scenario (scenario of searching for a file by using data in the file) is data, and the information corresponding to the latter scenario (scenario of searching for a directory by using a directory path or searching for a file by using a file path) is a directory or a file. Data query principles are similar, and details are not described herein again.

Step 201: A query apparatus 100 obtains first configuration information provided by a user, where the first configuration information indicates an information type included in metadata.

The metadata is used to describe data, and the information type in the metadata may cover various information that can represent data properties. However, during actual application, more information types included in the metadata indicate larger occupied storage space. From a perspective of saving storage space, the metadata may include some important information. In addition, in an application scenario of data, some information representing data properties is important, and some information representing data properties may be ignored. For example, in a database scenario, information such as a data modification record, a data address, a data table name, or a file name is important, and a quantity of data modifications usually may be ignored.

In this embodiment of this application, the query apparatus 100 provides the user with an interface for configuring an information type included in metadata, and the user may transmit the first configuration information to the query apparatus 100 through the interface.

It should be noted that the interface provided by the query apparatus 100 for the user is a function provided by the query apparatus 100 for the user. A specific representation form of the interface is not limited in embodiments of this application. The interface may be represented as a dedicated command for providing the first configuration information, or the interface may be represented as a user-oriented visual interface.

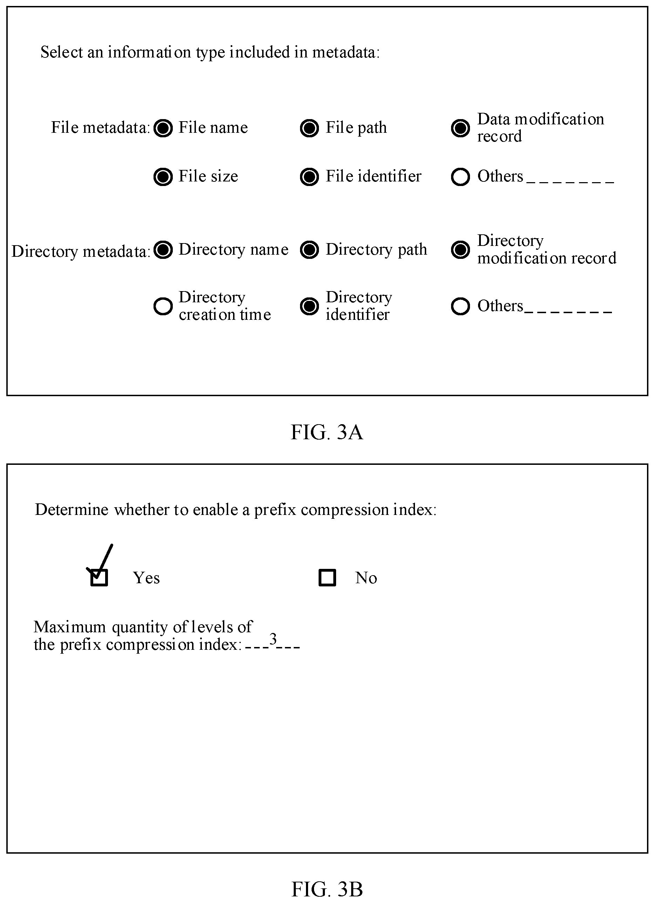

FIG. 3A is a diagram of a configuration interface according to an embodiment of this application. On the configuration interface, the user may select or type an information type included in metadata. The user may respectively configure information types included in file metadata and directory metadata.

Step 202: The query apparatus 100 obtains second configuration information provided by the user, where the second configuration information indicates whether to enable a prefix compression index and a maximum quantity of levels of the prefix compression index.

The prefix compression index can implement efficient data query, but the prefix compression index occupies some storage space. In addition, a larger quantity of levels of the prefix compression index indicates higher data query efficiency and larger occupied storage space. In this embodiment of this application, the user is allowed to select to enable the prefix compression index or not to enable the prefix compression index according to an actual requirement of the user. If the user selects to enable the prefix compression index, the user is further allowed to configure the maximum quantity of levels of the prefix compression index.

In this embodiment of this application, the query apparatus 100 provides the user with an interface for configuring a prefix compression index, and the user may transmit the second configuration information to the query apparatus 100 through the interface.

Similar to the foregoing interface for configuring an information type included in metadata, the interface for configuring a prefix compression index only describes a configuration function provided by the query apparatus 100 for the user. A specific representation form of the interface is not limited in embodiments of this application.

FIG. 3B is a diagram of a configuration interface according to an embodiment of this application. On the configuration interface, the user may select whether to enable a prefix compression index and a maximum quantity of levels of the prefix compression index.

A sequence of performing step 201 and step 202 is not limited in this embodiment of this application. Step 201 may be performed before step 202, or step 202 may be performed before step 201. Certainly, during actual application, the query apparatus 100 may alternatively synchronously perform step 201 and step 202. The query apparatus 100 allows the user to complete configuration of the metadata information type and configuration of the prefix compression index at a time, that is, the user synchronously provides the first configuration information and the second configuration information.

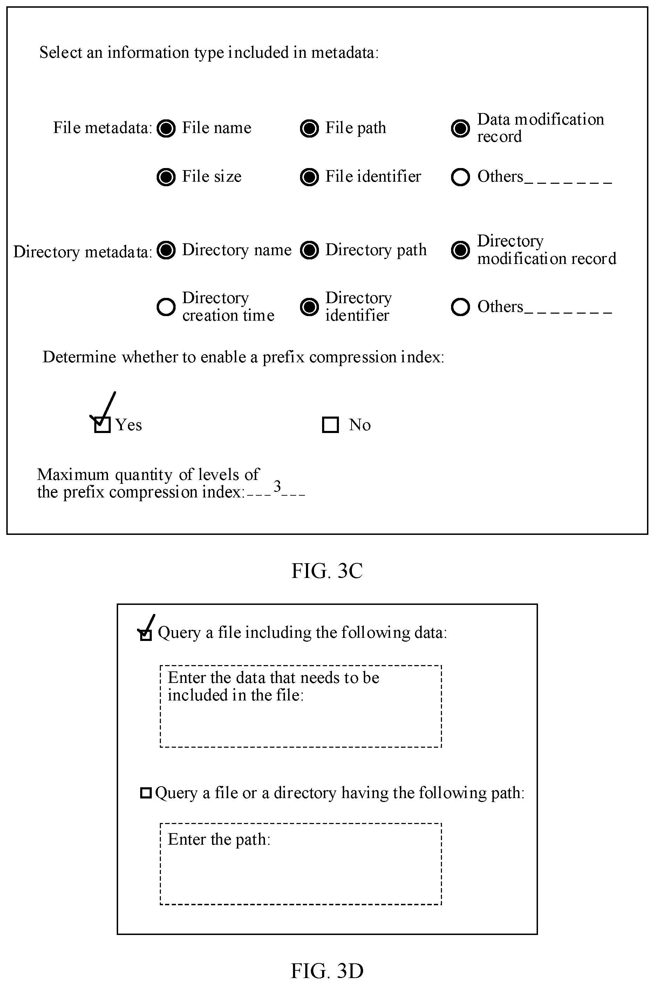

FIG. 3C is a diagram of a configuration interface according to an embodiment of this application. On the configuration interface, the user may select an information type included in metadata, and may also select whether to enable a prefix compression index and a maximum quantity of levels of the prefix compression index.

In the foregoing descriptions, an example in which the user provides the first configuration information and the second configuration information is used for description. The query apparatus 100 further allows the user to complete configuration of other information. For example, the query apparatus 100 allows the user to complete configuration of a data query resource. The data query resource indicates that the query apparatus 100 is a maximum resource that can be occupied to implement data query, and the data query resource includes but is not limited to a quantity of processors, a quantity of processor cores, a size of an internal memory, a cluster setting (indicating a cluster in which the query apparatus 100 needs to be deployed or a node in a cluster), and a backup setting (for example, a data backup manner).

In this embodiment of this application, step 201 or step 202 is an optional step. The query apparatus 100 may pre-store the information type included in the metadata. Alternatively, the query apparatus 100 may enable the prefix compression index by default, and the query apparatus 100 stores a preset maximum quantity of levels of the prefix compression index. The query apparatus 100 may perform subsequent steps by using the pre-stored information type included in the metadata and/or the maximum quantity of levels of the prefix compression index.

Step 203: The query apparatus 100 obtains the metadata of the data, and stores the metadata of the user in a storage apparatus 200 based on the first configuration information.

The query apparatus 100 provides the user with a data interface, and the user may transmit the data to the query apparatus 100 through the data interface. After obtaining the data through the data interface and generating the metadata of the data based on the data, the query apparatus 100 may store the metadata based on the first configuration information, that is, reserve the information type indicated by the first configuration information in the metadata, and delete the information type indicated by the first configuration information.

Step 204: The query apparatus 100 constructs an index for the metadata of the user based on the second configuration information.

If the second configuration information indicates to enable the prefix compression index, the query apparatus 100 may construct the prefix compression index for the metadata. If the second configuration information further indicates the maximum quantity of levels of the prefix compression index, a quantity of levels of the prefix compression index constructed by the query apparatus 100 is not greater than the maximum quantity of levels of the prefix compression index that is indicated by the second configuration information. Optionally, the query apparatus 100 may further construct an inverted index for the metadata of the user.

If the second configuration information indicates not to enable the prefix compression index, the query apparatus 100 may construct an inverted index for the metadata of the user.

When the query apparatus 100 performs step 204, the constructed prefix compression index may be a prefix compression index applicable to a scenario of querying a file by using data in the file, or may be a prefix compression index applicable to a scenario of searching for a directory by using a directory path or searching for a file by using a file path, or may include a prefix compression index applicable to a scenario of querying a file by using data in the file and a prefix compression index applicable to a scenario of searching for a directory by using a directory path or searching for a file by using a file path. In the embodiment shown in FIG. 2, an example in which the prefix compression index constructed by the query apparatus 100 is a prefix compression index applicable to a scenario of searching for a directory by using a directory path or searching for a file by using a file path is used for description.

In addition, a form of the prefix compression index constructed by the query apparatus 100 is not limited in this embodiment of this application. The query apparatus 100 may respectively construct prefix compression indexes in forms of a skip list and a bitmap, or may construct only a prefix compression index in a form of a skip list or a bitmap.

Similarly, when the query apparatus 100 performs step 204, the constructed inverted index may be an inverted index applicable to a scenario of querying a file by using data in the file, or may be an inverted index applicable to a scenario of searching for a directory by using a directory path or searching for a file by using a file path, or may include an inverted index applicable to a scenario of querying a file by using data in the file and an inverted index applicable to a scenario of searching for a directory by using a directory path or searching for a file by using a file path. In the embodiment shown in FIG. 2, an example in which the inverted index constructed by the query apparatus 100 is an inverted index applicable to a scenario of querying a file by using data in the file is used for description.

In addition, a form of the inverted list constructed by the query apparatus 100 is not limited in this embodiment of this application. It is assumed herein that the query apparatus 100 respectively constructs inverted lists in forms of a skip list and a bitmap.

In this case, a preparation operation for the query apparatus 100 to perform data query is completed. After the index is constructed, the query apparatus 100 may receive and process a query request.

Step 205: The query apparatus 100 receives a query request triggered by the user, where the query request carries a query statement, and the query statement may be data in a query target or a path of a query target.

A manner of performing step 205 by the query apparatus 100 is not limited in this embodiment of this application. For example, the user may send the query request to the query apparatus 100 by using a compute device deployed on a user side. For another example, the user may directly interact with the query apparatus 100, and the user may directly trigger the query apparatus 100 to generate the query request.

FIG. 3D shows a visualized query interface provided by the query apparatus 100 for the user according to an embodiment of this application. On the query interface, the user may select to query a file by using data in the file, and type the data in the query target at a corresponding position. The user may alternatively select to query a target file (or a target directory) by using a target file path (or a target directory path), and type the path of the query target at a corresponding position.

The query apparatus 100 supports fuzzy query, that is, when typing the data in the query target or the path of the query target, the user may enter a wildcard to replace any character.

Step 206: The query apparatus 100 performs query pre-filtering on the query request. Step 206 is an optional step. During actual application, the query apparatus 100 may directly perform subsequent steps without performing query pre-filtering.

The query apparatus 100 may perform query pre-filtering on the query request based on all or part of the following:

### Filtering 1: Perform filtering on the query request based on a word frequency.

If the query request carries the data in the query target, the data in the query target may be tokenized to obtain one or more words. The query apparatus 100 stores a maximum occurrence frequency of each word, and the maximum occurrence frequency of any word is a maximum quantity of times the word appears in a single file in a file system.

For one of the words, the query apparatus 100 determines whether an occurrence frequency of the word in the data in the query target that is carried in the query request is greater than a maximum occurrence frequency of the token. If yes, the query request is rejected; otherwise, the query request succeeds in filtering and the query request may be processed.

If the query request carries the path of the query target, the path of the query target are separated by separators to form words. The query apparatus 100 stores a maximum occurrence frequency of each word, and the maximum occurrence frequency of any word is a maximum quantity of times the token appears in a single file path or directory path in the file system.

For one of the words, the query apparatus 100 determines whether an occurrence frequency of the word in the data in the query target that is carried in the query request is greater than a maximum occurrence frequency of the word. If yes, the query request is rejected; otherwise, the query request succeeds in filtering and the query request may be processed.

### Filtering 2: Perform filtering on the query request based on a length of data in a file or a length of a directory path (or a file path).

If the query request carries the data in the query target, the query apparatus 100 stores a maximum data length, and the maximum data length is a maximum value of a length of the data in a single file in a file system.

The query apparatus 100 determines whether the length of the data in the query target that is carried in the query request is greater than a maximum data length. If yes, the query request is rejected; otherwise, the query request succeeds in filtering and the query request may be processed.

If the query request carries the path of the query target, the query apparatus 100 stores a maximum path length, and the maximum path length is a maximum value of a length of a single file path or directory path in the file system.

The query apparatus 100 determines whether the length of the path of the query target that is carried in the query request is greater than the maximum path length. If yes, the query request is rejected; otherwise, the query request succeeds in filtering and the query request may be processed.

### Filtering 3: Perform filtering on the query request based on a word position.

If the query request carries the data in the query target, the data in the query target may be tokenized to obtain one or more words. The query apparatus 100 stores preset positions of some or all of the words, and the preset position of any word is a position of the word in data included in a file in a file system.

For one of the words, the query apparatus 100 determines whether a position of the word in the data in the query target that is carried in the query request is different from a preset position of the token. If yes, the query request is rejected; otherwise, the query request succeeds in filtering and the query request may be processed.

If the query request carries the path of the query target, the path of the query target are separated by separators to form words. The query apparatus 100 stores preset positions of some or all of the words, and the preset position of any word is a position of the token in a file path or a directory path in a file system.

For any word, the query apparatus 100 determines whether a position of the word in the data in the query target that is carried in the query request is different from a preset position of the word. If yes, the query request is rejected; otherwise, the query request succeeds in filtering and the query request may be processed.

When the query request succeeds in query pre-filtering, subsequent steps may be performed; otherwise, the query apparatus 100 rejects the query request, and the query apparatus 100 further notifies the user that the query target cannot be found.

Through query pre-filtering, some query requests that cannot be processed can be rejected in advance, so that subsequent steps do not need to be performed for these query requests, thereby effectively improving data query efficiency.

An example in which the query request carries the path of the query target and an example in which the query apparatus 100 processes the query request based on the prefix compression index are used below for description.

Step 207: The query apparatus 100 queries the prefix compression index based on the path of the query target that is carried in the query request, to determine a target prefix compression index. The path of the query target includes a target directory-file combination corresponding to the target prefix compression index. In other words, the path of the query target includes a directory name and a file name in the target directory-file combination.

Because the query apparatus 100 constructs one or more prefix compression indexes in advance, the query apparatus 100 needs to first locate, from the one or more prefix compression indexes, the target prefix compression index that records the query target.

The foregoing specific example in which the prefix compression index is described is used as an example. It is assumed that the path of the query target that is carried in the query request is /abc/bcd/*/. In this case, the query apparatus 100 may query a prefix compression index (in a form of a skip list) of a corresponding directory-file combination abc and bcd, that is, the level-1 prefix compression index 1.

Step 208: The query apparatus 100 determines a first target index entry from the target prefix compression index based on the path of the query target, where the first target index entry records an identifier of the query target.

If the first target index entry includes an identifier of a target file, some position information included in the first target index entry is consistent with a position of a directory name or a file name in the query statement.

Specifically, for a file name in the target directory-file combination (the file name may be a file name of the target file, or a file name of a file other than the target file), if the first target index entry includes a position of the file name in a path of the target file, the position, included in the first target index entry, of the file name in the path of the target file is consistent with a position of the file name in the query statement. For example, the path of the query target is /abc/bcd/*/. If the first target index entry includes a position of the file name bcd in the path of the target file, a position of the file name abc in the path of the target file needs to be the second, which is consistent with a position of the file name bcd in the query statement.

For a directory name in the target directory-file combination, if the first target index entry includes a position of the directory name in the path of the target file, the position, included in the first target index entry, of the directory name in the path of the target file is consistent with a position of the directory name in the query statement. For example, the path of the query target is /abc/bcd/*/. If the first target index entry includes a position of the directory name abc in the path of the target file, a position of the directory name abc in the path of the target file needs to be at the beginning, which is consistent with a position of the directory name abc in the query statement.

If the first target index entry includes an identifier of a target directory, some position information included in the first target index entry is consistent with a position of a directory name or a file name in the query statement.

Specifically, for a file name in the target directory-file combination, if the first target index entry includes a position of the file name in the path of the target directory, the position, included in the first target index entry, of the file name in the path of the target directory is consistent with a position of the file name in the query statement.

For a directory name in the target directory-file combination (the directory name may be a file name of the target directory, or a directory name of a directory other than the target directory), if the first target index entry includes a position of the directory name in the path of the target directory, the position, included in the first target index entry, of the directory name in the path of the target directory is consistent with a position of the target name in the query statement.

Therefore, a path of each file or directory recorded in the target prefix compression index determined in step 207 includes each file name or directory name in the path of the query target. The query apparatus 100 needs to further analyze the target prefix compression index, and determine the query target from each file or directory recorded in the target prefix compression index.

The query apparatus 100 determines the first target index entry based on a position, in the path of the query target, of the file name or directory name in the path and a position, in the file path, of at least one file name or directory name that is included in the directory-file combination corresponding to the target prefix compression index and that is recorded in the target prefix compression index.

Herein, a position, in the file path, of one directory name that is included in the directory-file combination corresponding to the target prefix compression index and that is recorded in the target prefix compression index is used as an example for description. The query apparatus 100 may find, from the target prefix index, an index entry in which a position of the recorded directory name in the file path is consistent with a position of the directory name in the path of the query target, and the index entry is the first target index entry.

Step 209: The query apparatus 100 obtains the query target based on the first target index entry, and feeds back the query target to the user.

After determining the first target index entry, the query apparatus 100 may determine the identifier of the query target from the first target index entry, and the query apparatus 100 may obtain the query target from the storage apparatus 200 based on the identifier of the query target.

An example in which the query request carries the data in the query target and an example in which the query apparatus 100 processes the query request based on the inverted index are used below for description.

Step 210: The query apparatus 100 tokenizes the data in the query target to convert the data in the query target into one or more words. A manner in which the query apparatus 100 tokenizes the data in the query target is not limited in this embodiment of this application. For example, the query apparatus 100 may tokenize the data in the query target by using an n-gram algorithm, where a value of n is a quantity of words obtained after the data in the query target is tokenized.

If the data in the query target is converted into only one word, step 212 may be directly performed (a file recorded in an inverted list corresponding to the word is a candidate file). If the data in the query target is converted into a plurality of words, step 211 may be performed.

Step 211: The query apparatus 100 determines inverted lists corresponding to the words, performs intersection on the inverted lists corresponding to the plurality of words, and determines candidate files recorded in the inverted lists.

After obtaining the plurality of words, the query apparatus 100 may determine the inverted lists corresponding to the words in pre-constructed inverted lists. Intersection on the inverted lists corresponding to the plurality of words is to search for files recorded in the inverted lists corresponding to the plurality of words, and the files recorded in the inverted lists corresponding to the plurality of words are candidate files.

Herein, it is assumed that the query apparatus 100 obtains two tokens, and determines, in the pre-constructed inverted lists, that inverted lists corresponding to the word tokens are respectively a list 1 and a list 2, where the list 1 records a file 1, a file 2, and a file 3, and the list 2 records the file 2, the file 3, and a file 4. In this case, candidate files obtained after intersection is performed on the list 1 and the list 2 are the file 3 and the file 2.

Because the query apparatus 100 constructs inverted lists in forms of a skip list and a bitmap, the query apparatus 100 may synchronously perform step 211 on the skip list and the bitmap. In other words, the query apparatus 100 not only performs intersection on bitmaps corresponding to the words and determines candidate files recorded in the inverted lists, but also synchronously performs intersection on skip lists corresponding to the words and determines candidate files recorded in the inverted lists. If the candidate files can be more quickly determined through intersection on the bitmaps corresponding to the words, a subsequent step is performed by using the candidate files determined after intersection is performed on the bitmaps corresponding to the words. If the candidate files can be more quickly determined through intersection on the skip lists corresponding to the words, a subsequent step is performed by using the candidate files determined after intersection is performed on the skip lists corresponding to the words.

Alternatively, the query apparatus 100 may perform step 211 only on a skip list or a bitmap. For example, when the shortest length of an inverted list corresponding to a token is greater than a first threshold, the query apparatus 100 queries a bitmap, and performs step 211 on the bitmap; or when the shortest length of an inverted list corresponding to a token is not greater than a first threshold, the query apparatus 100 queries a skip list.

Step 212: The query apparatus 100 determines the target file from the candidate files based on a sequence of positions, in the candidate files, of the words recorded in the inverted lists and positions of the words in the data in the query target.

In addition to recording a file identifier, any index entry in the inverted list further records a position, in data in a file, of a word corresponding to the inverted list. For any candidate file, the query apparatus 100 may determine whether a position sequence, in the candidate file, of the word recorded in the inverted list corresponding to each word is consistent with a position of each word in the data in the query target; and if yes, the candidate file is the target file; otherwise, the candidate file is not the target file.

Step 213: The query apparatus 100 feeds back the target file to the user.

It should be noted that in this embodiment of this application, the query method provided in this embodiment of this application is described only by using two query scenarios: querying data by using a path (for example, querying a file by using a file path or querying a directory by using a directory path), and querying a file by using data in the file. Actually, the query method provided in this embodiment of this application is also applicable to another scenario, for example, a scenario of querying a directory by using data in a file, or querying a directory or a file by using other information of the file or the directory. Specific implementation processes are similar. In other words, a prefix compression index is constructed by using a combination of some key information, and then the prefix compression index is queried by using the received query statement. Alternatively, an inverted list is constructed by using some key information, then candidate targets are determined after intersection is performed on inverted lists of all key information included in the query statement, and the query target is determined from the candidate targets by using the key information in the query statement. For details, refer to the foregoing content. Details are not described herein again.

In embodiments of this application, the query apparatus 100 may be a hardware apparatus. For example, the query apparatus 100 may be a compute device. An acceleration apparatus is deployed in the compute device, and a function of the query apparatus 100 may be jointly implemented by a processor and the acceleration apparatus in the compute device.

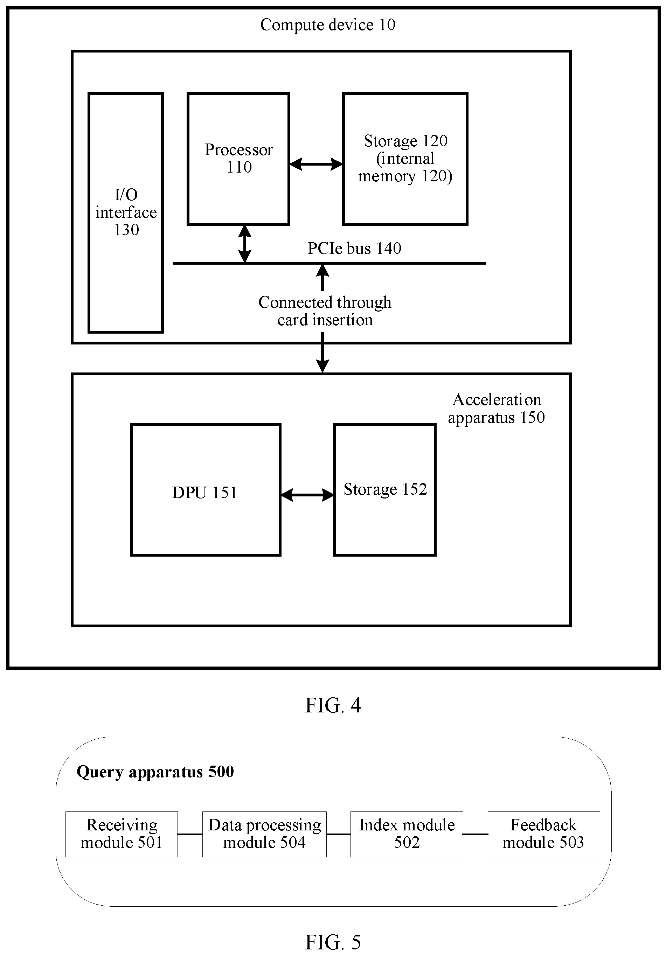

The following describes hardware components included in a compute device 10. FIG. 4 is a diagram of a structure of the compute device 10 according to an embodiment of this application. The compute device 10 includes an I/O interface 130, a processor 110, a storage 120, and an acceleration apparatus 150. The I/O interface 130, the processor 110, the storage 120, and the acceleration apparatus 150 may be connected to each other through a system bus. The system bus may be a peripheral component interconnect express (peripheral component interconnect express, PCIe) bus, or may be a bus of a compute express link (compute express link, CXL), a universal serial bus (universal serial bus, USB) protocol, or another protocol.

FIG. 4 shows an example of a connection manner. In FIG. 4, the acceleration apparatus 150 may be directly inserted into a card slot on a mainboard of the compute device 10, and exchange data with the processor 110 through a PCIe bus 140.

The I/O interface 130 is configured to communicate with a device located outside the compute device 10. For example, data (such as first configuration information, second configuration information, a query request, or metadata or data of a user) sent by a device other than the compute device 10 is received through the I/O interface 130, or a query target is fed back to a device other than the compute device 10 through the I/O interface 130.

The processor 110 is an operation core and a control core of the compute device 10, and may be a central processing unit (central processing unit, CPU), or may be another specific integrated circuit. Alternatively, the processor 110 may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like.

The storage 120 is usually configured to store computer program instructions. The storage 120 may also be configured to temporarily store metadata, data, an index, or the like. The storage 120 has an advantage of a high access speed. The storage 120 is usually a dynamic random access memory (dynamic random access memory, DRAM). In addition to the DRAM, the storage 120 may alternatively be another random access memory, for example, a static random access memory (static random access memory, SRAM) or a storage class memory (storage class memory, SCM). In addition, the storage 120 may alternatively be a read-only memory (read-only memory, ROM). For example, the read-only memory may be a programmable read-only memory (programmable read-only memory, PROM) or an erasable programmable read-only memory (erasable programmable read-only memory, EPROM). The storage 120 may alternatively be a dual in-line memory module (dual in-line memory module, DIMM), a flash memory medium (FLASH), a hard disk drive (hard disk drive, HDD), a solid-state drive (solid-state drive, SSD), or the like.

The processor 110 is connected to the storage 120 through a double data rate (double data rate, DDR) bus or another type of bus. The storage 120 is understood as an internal memory (internal memory) 120 of the compute device 10, and the internal memory 120 is also referred to as a main memory (main memory).

The processor 110 may invoke the computer program instructions in the internal memory 120 to perform all or some of the steps performed by the query apparatus 100100 in the embodiment shown in FIG. 2.

Although not shown, the compute device 10 further includes a persistent storage, or there is a storage that can be remotely accessed by the compute device 10. Regardless of a type of the persistent storage, the persistent storage may be configured to store data, metadata, or a constructed index.

The storage that can be remotely accessed by the compute device 10 may be a storage that is connected to the compute device 10 through a network and that is located outside the compute device 10. The storage may be a volatile memory (volatile memory), for example, a RAM, a DRAM, an SCM, or an SRAM, or may be a non-volatile memory (non-volatile memory), for example, a ROM, a flash memory, an HDD, an SSD, or an SCM.

The persistent storage included in the compute device 10 may be connected to the compute device 10 through a system bus. The storage may be a non-volatile memory such as a ROM, a flash memory, an HDD, or an SSD.

The acceleration apparatus 150 is connected to the compute device 10, and the acceleration apparatus 150 may be used as an external device of the compute device 10. The acceleration apparatus 150 may alternatively be deployed inside the compute device 10. For example, the acceleration apparatus 150 is located on the mainboard or a backplane of the compute device 10. FIG. 4 is a diagram in which the acceleration apparatus 150 is deployed inside the compute device 10.

The acceleration apparatus 150 may be used as a module that has a data processing function and that is attached to the compute device 10, and undertake some functions of the compute device 10. In other words, some functions of the compute device 10 are offloaded to the acceleration apparatus 150, and the acceleration apparatus 150 replaces the compute device 10 (for example, the processor 110 in the compute device 10) to process data and execute some tasks, to reduce pressure of the processor 110 in the compute device 10 and release computational power of the processor 110.

A specific function of the acceleration apparatus 150 is not limited in embodiments of this application. For example, the acceleration apparatus 150 may undertake a query pre-filtering function, to determine whether a query request can continue to be processed; and if the query request does not succeed in query pre-filtering, the acceleration apparatus 150 may directly reject the query request; or if the query request succeeds in query pre-filtering, the acceleration apparatus 150 may forward the query request to the processor 110 in the compute device 10, and the processor 110 continues to process the query request. For another example, the acceleration apparatus 150 may undertake a data processing function of the query apparatus 100, to complete metadata processing and index construction (after storing metadata and constructing an index, the acceleration apparatus may notify the processor 110 in the compute device 10 of storage positions of the metadata and the index). The processor 110 in the compute device 10 undertakes a data query function of the query apparatus 100, to process a received query request.

For another example, the acceleration apparatus 150 and the processor 110 in the compute device 10 may cooperate to implement a data query function of the query apparatus 100. Other functions of the query apparatus 100 may be implemented by the acceleration apparatus 150 and/or the processor 110 in the compute device 10 in this scenario. An implementation in which the acceleration apparatus 150 and the processor 110 cooperate to implement the data query function is not limited in embodiments of this application. The following describes a possible implementation:

Implementation 1: A constructed prefix compression index is a prefix compression index applicable to a scenario of searching for a directory by using a directory path or searching for a file by using a file path, and a constructed inverted list is an inverted list applicable to a scenario of querying a file by using data in the file.

In this case, for a query request that carries a path of a query target, the processor 110 in the compute device 10 processes the query request. For a specific processing manner, refer to step 207 to step 209. For a query request that carries data in a query target, the acceleration apparatus 150 processes the query request. For a specific processing manner, refer to step 210 to step 213.

Implementation 2: A constructed prefix compression index is a prefix compression index applicable to a scenario of searching for a directory by using a directory path or searching for a file by using a file path, and a directory-file combination corresponding to the prefix compression index definitely includes a root directory of a file system; and a constructed inverted list is an inverted list applicable to a scenario of searching for a directory by using a directory path or searching for a file by using a file path.

In this case, the compute device 10 may process a query request that carries a path of a query target. If the path of the query target that is carried in the query request includes a root directory, the processor 100 in the compute device 10 processes the query request. For a specific processing manner, refer to step 207 to step 209. If the path of the query target that is carried in the query request does not include a root directory, the acceleration apparatus 150 processes the query request. A specific processing manner is similar to the manner described in step 210 to step 213, and a difference lies in that a type of a query statement carried in the query request is different. Basic processing manners are similar: determining inverted lists corresponding to tokens (namely, directory names or file names); performing intersection on the inverted lists to determine a candidate target; and then determining a query target by using a position of each token in a path of the query target and a position, in the candidate target, of the token recorded in the inverted list.

Implementation 3: A constructed prefix compression index is a prefix compression index applicable to a scenario of querying a file by using data in the file, and a constructed inverted list is an inverted list applicable to a scenario of searching for a directory by using a directory path or searching for a file by using a file path.

In this case, the compute device 10 may process a query request that carries data in a query target. If the data in the query target that is carried in the query request includes a plurality of tokens, the processor 110 in the compute device 10 processes the query request. A specific processing manner is similar to step 207 to step 209, and a difference lies in that a type of a query statement carried in the query request is different. Basic processing manners are similar: determining, from a prefix compression index, a target prefix compression index corresponding to a character combination (that is, a character combination including one or more words obtained after the data in the query target is tokenized); then determining a first target index entry based on a position of each token in the data in the query target and a position of the token recorded in the target prefix compression index, to determine an identifier of the query target; and obtaining the query target based on the identifier of the query target. If the path of the query target that is carried in the query request includes only one token, the acceleration apparatus 150 processes the query request. For a specific processing method, refer to step 210 to step 213.

Implementation 4: A constructed inverted list is in a form of a skip list and a bitmap, and the constructed inverted list may include an inverted list applicable to a scenario of querying a file by using data in the file and/or an inverted list applicable to a scenario of searching for a directory by using a directory path or searching for a file by using a file path.

It is assumed that in a scenario of querying a file by using data in the file, when the shortest length of an inverted list corresponding to a word obtained after data in a query target in a query request is tokenized is greater than a first threshold, the acceleration apparatus 150 processes the query request. For a specific processing manner, refer to step 210 to step 213. The acceleration apparatus 150 performs step 211 on a bitmap. When the shortest length of an inverted list corresponding to a token obtained after data in a query target in a query request is tokenized is not greater than a first threshold, the processor 100 in the compute device 10 processes the query request. A specific processing manner is similar to step 210 to step 213. The acceleration apparatus 150 performs step 211 on a skip list.

It is assumed that in a scenario of searching for a directory by using a directory path or searching for a file by using a file path, when the shortest length of an inverted list corresponding to a word of a path of a query target in a query request is greater than a first threshold, the acceleration apparatus 150 processes the query request. For a specific processing manner, refer to step 210 to step 213. The acceleration apparatus 150 performs step 211 on a bitmap. When the shortest length of an inverted list corresponding to a word obtained after data in a query target in a query request is tokenized is not greater than a first threshold, the processor 110 in the compute device 10 processes the query request. A specific processing manner is similar to step 210 to step 213. The acceleration apparatus 150 performs step 211 on a skip list. A difference lies in that the inverted list corresponds to a directory name or a file name rather than data in a file.

In addition, in this embodiment of this application, the acceleration apparatus 150 is allowed to process the query request in another manner. For example, the acceleration apparatus 150 stores a finite state machine, and the finite state machine can be used to determine whether a directory (or a file) has one or more words, or determine whether a path of a directory (or a file) has one or more words. The acceleration apparatus 150 may process the query request by using the finite state machine.

The following describes a structure of the acceleration apparatus 150. The acceleration apparatus 150 includes a processor, and the processor may be a processor having a data processing function, for example, a data processing unit (data processing unit, DPU) 151, a graphics processing unit (graphics processing unit, GPU), a tensor processing unit (tensor processing unit, TPU), or a neural network processing unit (neural network processing unit, NPU). In FIG. 4, only an example in which the processor included in the acceleration apparatus 150 is the DPU 151 is used for description. Optionally, the acceleration apparatus 150 further includes a storage 152, a power supply circuit, and the like. The DPU 151 is connected to the storage 152 through a system bus. The system bus may be a PCIe-based line, or may be a bus of a CXL, a USB protocol, or another protocol.

The DPU 151 is a main operation unit of the acceleration apparatus 150 and is a core unit of the acceleration apparatus 150, and the DPU 151 undertakes a main function of the acceleration apparatus 150.

In the example shown in FIG. 4, an example in which the processor and/or the acceleration apparatus 150 in the compute device 10 implement/implements a function of the query apparatus 100 is used for description. During actual application, a similar structure may also be used in a storage apparatus 200, that is, the storage apparatus 200 may also exist in a form of the compute device 10. A function of the storage apparatus 200 (for example, storing data or transmitting data based on an indication of the query apparatus 100) may be implemented by the acceleration apparatus 150.

Based on a same inventive concept as the method embodiment, an embodiment of this application further provides a query apparatus. The query apparatus is configured to perform the method performed by the query apparatus 100 in the method embodiment. As shown in FIG. 5, a query apparatus 500 includes a receiving module 501, an index module 502, and a feedback module 503. Specifically, in the query apparatus 500, the modules are connected to each other through a communication path.

The receiving module 501 is configured to receive a query request, where the query request is used to obtain a query target from a file system, the query request carries a query statement, the query statement includes data in the query target or a path of the query target, and the query statement includes a wildcard.

The index module 502 is configured to: query a prefix compression index based on the query statement to determine an identifier of the query target, where the prefix compression index records an identifier of a file or an identifier of a directory, and the file or the directory meets any one of the following conditions: a path of the file includes a directory-file combination, a path of the directory includes the directory-file combination, the file includes a character combination, and the directory includes the character combination; and obtain the query target based on the identifier of the query target.

The directory-file combination includes at least one file name and at least one directory name, or includes at least two directory names, and the character combination includes at least two characters.

The feedback module 503 is configured to feed back the query target.

In a possible implementation, the apparatus further includes a data processing module 504.

The receiving module 501 obtains first configuration information, where the first configuration information indicates an information type included in metadata, and the information type included in the metadata includes all or part of the following: an identifier of a file, a path of a file, an identifier of a directory, and a path of a directory.

The data processing module 504 stores metadata of the file or the directory based on the first configuration information.

In a possible implementation, the receiving module 501 obtains second configuration information, where the second configuration information indicates to enable the prefix compression index.

The data processing module 504 constructs the prefix compression index based on the second configuration information and the stored metadata of the file or the directory.

In a possible implementation, the second configuration information further indicates a maximum quantity of levels of the prefix compression index, and the maximum quantity of levels of the prefix compression index describes a total quantity of directory names and file names in the directory-file combination, or describes a total quantity of characters in the character combination.

In a possible implementation, the prefix compression index includes at least one index entry, the index entry includes the identifier of the file or the identifier of the directory, and the index entry further includes a position of a file name of the file in the path of the file or a position of a directory name of the directory in the path of the directory.

In a possible implementation, the prefix compression index includes at least one index entry, the index entry includes the identifier of the file or the identifier of the directory, and the index entry further includes:
a position of a character in the character combination in the directory or a position of a character in the character combination in the file.

In a possible implementation, the index module 502 determines a target prefix compression index from the prefix compression index based on the query statement, where the query statement includes a target directory-file combination corresponding to the target prefix compression index; and then determines a first target index entry from the target prefix compression index based on the query statement.

If the first target index includes an identifier of a target file, the identifier of the query target is the identifier of the target file, and for a file name or a directory name included in the target directory-file combination, the first target index entry and the query statement meet all or part of the following:

First position information included in the first target index entry is consistent with a position of the file name in the query statement, where the first position information is a position of the file name in a path of the target file.

Second position information included in the first target index entry is consistent with a position of the directory name in the query statement, where the second position information is a position of the directory name in the path of the target file.

If the first target index includes an identifier of a target directory, the identifier of the query target is the identifier of the target directory, and for a file name or a directory name included in the target directory-file combination, the first target index entry and the query statement meet all or part of the following:

Third position information included in the first target index entry is consistent with a position of the file name in the query statement, where the first position information is a position of the file name in a path of the target directory.

Fourth position information included in the first target index entry is consistent with a position of the directory name in the query statement, where the fourth position information is a position of the directory name in the path of the target directory.

In a possible implementation, the index module 502 may further perform query by using an inverted list; and the index module 502 may query an inverted list based on the query statement to determine inverted lists corresponding to words in the query statement, determine, based on the inverted lists corresponding to the tokens, candidate targets included in the inverted lists corresponding to the tokens, and then determine a query target from the candidate targets based on positions, in the query statement, of the words in the query statement and positions, in the candidate targets, of the words recorded in the inverted lists corresponding to the words.

In a possible implementation, for a word in the query statement, the query target meets the following:
A position of the word in the query statement is the same as a position, in the query target, of the word recorded in the inverted list corresponding to the word.

In a possible implementation, the index module 502 may further determine that the query statement meets all or part of the following:
An occurrence frequency, in the query statement, of a word in the query statement is not greater than a maximum occurrence frequency of the word.

A length of the query statement is not greater than a maximum length of data in a file or a maximum length of a path.

A position of the word in the query statement is consistent with a preset position of the word.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the module may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a terminal device (which may be a personal computer, a mobile phone, a network device, or the like) or a processor (processor) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

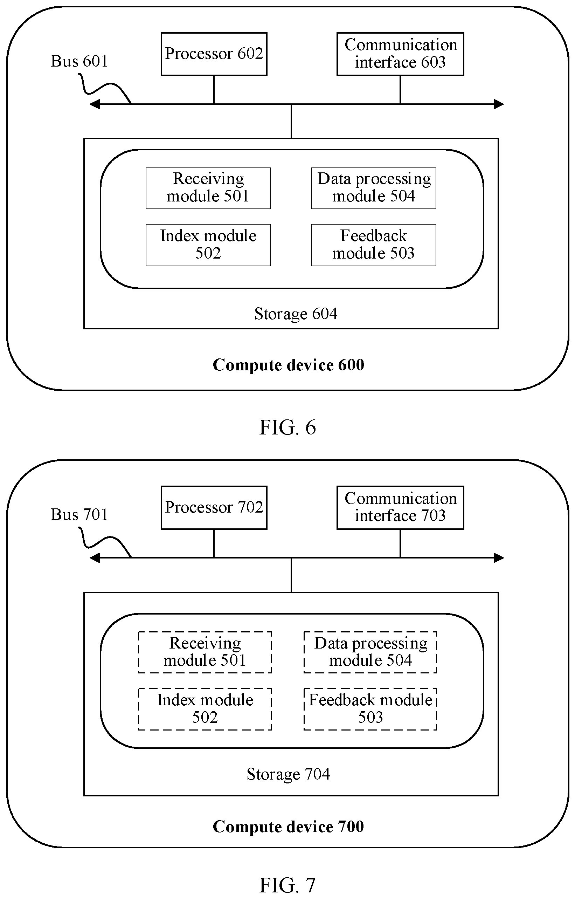

This application further provides a compute device 600 shown in FIG. 6. The compute device 600 includes a bus 601, a processor 602, a communication interface 603, and a storage 604. The processor 602, the storage 604, and the communication interface 603 communicate with each other through the bus 601.

The processor 602 may be a CPU, or may be another general-purpose processor, a DSP, an ASIC, an FPGA or another programmable logic device, a discrete gate or transistor logic device, a discrete hardware component, or the like.

The storage 604 may be a DRAM. In addition to the DRAM, the storage 604 may alternatively be another random access memory, for example, an SRAM. In addition, the storage 602 may alternatively be a ROM. The read-only memory may be, for example, a PROM or an EPROM. The storage 604 may alternatively be a flash memory medium, an HDD, an SSD, or the like.

The storage 604 stores computer program instructions, and the processor 602 executes the computer program instructions to perform the steps performed by the query apparatus 100 in the method described in FIG. 2. The storage 604 may further include a software module (for example, a plurality of modules in the query apparatus 500) required for another running process, for example, an operating system. The operating system may be LINUX^{™}, UNIX^{™}, WINDOWS^{™}, or the like.

This application further provides a compute device system. The compute device system includes at least one compute device 700 shown in FIG. 7. The compute device 700 includes a bus 701, a processor 702, a communication interface 703, and a storage 704. The processor 702, the storage 704, and the communication interface 703 communicate with each other through the bus 701. The at least one compute device 700 in the compute device system performs communication through a communication path.

For specific types of the processor 702 and the storage 704, refer to the related descriptions of the processor 602 and the storage 604. Details are not described herein again. The processor 702 executes computer program instructions stored in the storage 704, to perform some or all of the steps performed by the detectionapparatus 100 in the method described in FIG. 2. The storage may further include a software module required for another running process, for example, an operating system. The operating system may be LINUX^{™}, UNIX^{™}, WINDOWS^{™}, or the like.

The at least one compute device 700 in the compute device system establishes communication with each other through a communication network, and each compute device 700 runs any one or more modules in the query apparatus 500.

The descriptions of procedures corresponding to the foregoing accompanying drawings have respective focuses. For a part of a procedure that is not described in detail, refer to related descriptions of another procedure.

All or some of the foregoing embodiments may be implemented by using software, hardware, firmware, or any combination thereof. When software is used for implementation, all or some of embodiments may be implemented in a form of a computer program product. The computer program product includes computer program instructions. When the computer program instructions are loaded and executed on a computer, all or some of the procedures or functions in FIG. 2 in embodiments of the present invention are generated.

The computer may be a general-purpose computer, a special-purpose computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any available medium accessible by a computer or a data storage device such as a server or a data center integrating one or more available media. The usable medium may be a magnetic medium (for example, a floppy disk, a hard disk, or a magnetic tape), an optical medium (for example, a DVD), or a semiconductor medium (for example, an SSD).

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A query method, comprising:
receiving a query request, wherein the query request is used to obtain a query target from a file system, the query request carries a query statement, the query statement comprises data in the query target or a path of the query target, and the query statement comprises a wildcard;
querying a prefix compression index based on the query statement to determine an identifier of the query target, wherein the prefix compression index records an identifier of a file or an identifier of a directory, and the file or the directory meets any one of the following conditions: a path of the file comprises a directory-file combination, a path of the directory comprises the directory-file combination, the file comprises a character combination, and the directory comprises the character combination, wherein
the directory-file combination comprises at least one file name and at least one directory name, or comprises at least two directory names, and the character combination comprises at least two characters; and
obtaining the query target based on the identifier of the query target and feeding back the query target.

2. The method according to claim 1, wherein the method further comprises:
obtaining first configuration information, wherein the first configuration information indicates an information type comprised in metadata, and the information type comprised in the metadata comprises all or part of the following: an identifier of a file, a path of a file, an identifier of a directory, and a path of a directory; and
storing metadata of the file or the directory based on the first configuration information.

3. The method according to claim 2, wherein the method further comprises:
obtaining second configuration information, wherein the second configuration information indicates to enable the prefix compression index; and
constructing the prefix compression index based on the second configuration information and the stored metadata of the file or the directory.

4. The method according to claim 3, wherein the second configuration information further indicates a maximum quantity of levels of the prefix compression index, and the maximum quantity of levels of the prefix compression index describes a total quantity of directory names and file names in the directory-file combination, or describes a total quantity of characters in the character combination.

5. The method according to any one of claims 1 to 4, wherein the prefix compression index comprises at least one index entry, the index entry comprises the identifier of the file or the identifier of the directory, and the index entry further comprises a position of a file name of the file in the path of the file or a position of a directory name of the directory in the path of the directory.

6. The method according to any one of claims 1 to 4, wherein the prefix compression index comprises at least one index entry, the index entry comprises the identifier of the file or the identifier of the directory, and the index entry further comprises:
a position of a character in the character combination in the directory or a position of a character in the character combination in the file.

7. The method according to claim 1 or 5, wherein querying the prefix compression index based on the query statement to determine the identifier of the query target comprises:
determining a target prefix compression index from the prefix compression index based on the query statement, wherein the query statement comprises a target directory-file combination corresponding to the target prefix compression index; and
determining a first target index entry from the target prefix compression index based on the query statement, wherein
if the first target index comprises an identifier of a target file, the identifier of the query target is the identifier of the target file, and for a file name or a directory name comprised in the target directory-file combination, the first target index entry and the query statement meet all or part of the following:
first position information comprised in the first target index entry is consistent with a position of the file name in the query statement, wherein the first position information is a position of the file name in a path of the target file; and
second position information comprised in the first target index entry is consistent with a position of the directory name in the query statement, wherein the second position information is a position of the directory name in the path of the target file; and
if the first target index comprises an identifier of a target directory, the identifier of the query target is the identifier of the target directory, and for a file name or a directory name comprised in the target directory-file combination, the first target index entry and the query statement meet all or part of the following:
third position information comprised in the first target index entry is consistent with a position of the file name in the query statement, wherein the first position information is a position of the file name in a path of the target directory; and
fourth position information comprised in the first target index entry is consistent with a position of the directory name in the query statement, wherein the fourth position information is a position of the directory name in the path of the target directory.

8. The method according to claim 1, wherein querying the prefix compression index based on the query statement of the query target to determine the identifier of the query target comprises:
querying an inverted list based on the query statement to determine inverted lists corresponding to words in the query statement;
determining, based on the inverted lists corresponding to the words, candidate targets comprised in all the inverted lists corresponding to the words;
determining the query target from the candidate targets based on positions, in the query statement, of the words in the query statement and positions, in the candidate targets, of the words recorded in the inverted lists corresponding to the words; and
feeding back the query target to the user.

9. The method according to claim 8, wherein that based on positions, in the query statement, of the words in the query statement and positions, in the candidate targets, of the words recorded in the inverted lists corresponding to the words comprises:
for a word in the query statement, the query target meets the following:
a position of the word in the query statement is the same as a position, in the query target, of the word recorded in the inverted list corresponding to the word.

10. The method according to any one of claims 1 to 9, wherein before querying the prefix compression index based on the query statement of the query target to determine the identifier of the query target, the method further comprises:
determining that the query statement meets all or part of the following:
an occurrence frequency, in the query statement, of a word in the query statement is not greater than a maximum occurrence frequency of the word;
a length of the query statement is not greater than a maximum length of data in a file or a maximum length of a path; and
a position of the word in the query statement is consistent with a preset position of the word.

11. A query apparatus, comprising:
a receiving module, configured to receive a query request, wherein the query request is used to obtain a query target from a file system, the query request carries a query statement, the query statement comprises data in the query target or a path of the query target, and the query statement comprises a wildcard;
an index module, configured to: query a prefix compression index based on the query statement to determine an identifier of the query target, wherein the prefix compression index records an identifier of a file or an identifier of a directory, and the file or the directory meets any one of the following conditions: a path of the file comprises a directory-file combination, a path of the directory comprises the directory-file combination, the file comprises a character combination, and the directory comprises the character combination; and obtain the query target based on the identifier of the query target, wherein
the directory-file combination comprises at least one file name and at least one directory name, or comprises at least two directory names, and the character combination comprises at least two characters; and
a feedback module, configured to feed back the query target.

12. The apparatus according to claim 11, wherein the apparatus further comprises a data processing module;
the receiving module is further configured to obtain first configuration information, wherein the first configuration information indicates an information type comprised in metadata, and the information type comprised in the metadata comprises all or part of the following: an identifier of a file, a path of a file, an identifier of a directory, and a path of a directory; and
the data processing module is configured to store metadata of the file or the directory based on the first configuration information.

13. The apparatus according to claim 12, wherein
the receiving module is configured to obtain second configuration information, wherein the second configuration information indicates to enable the prefix compression index; and
the data processing module is configured to construct the prefix compression index based on the second configuration information and the stored metadata of the file or the directory.

14. The apparatus according to claim 13, wherein the second configuration information further indicates a maximum quantity of levels of the prefix compression index, and the maximum quantity of levels of the prefix compression index describes a total quantity of directory names and file names in the directory-file combination, or describes a total quantity of characters in the character combination.

15. The apparatus according to any one of claims 11 to 14, wherein the prefix compression index comprises at least one index entry, the index entry comprises the identifier of the file or the identifier of the directory, and the index entry further comprises a position of a file name of the file in the path of the file or a position of a directory name of the directory in the path of the directory.

16. The apparatus according to any one of claims 11 to 14, wherein the prefix compression index comprises at least one index entry, the index entry comprises the identifier of the file or the identifier of the directory, and the index entry further comprises:
a position of a character in the character combination in the directory or a position of a character in the character combination in the file.

17. The apparatus according to claim 11 or 15, wherein the index module is configured to:
determine a target prefix compression index from the prefix compression index based on the query statement, wherein the query statement comprises a target directory-file combination corresponding to the target prefix compression index; and
determine a first target index entry from the target prefix compression index based on the query statement, wherein
if the first target index comprises an identifier of a target file, the identifier of the query target is the identifier of the target file, and for a file name or a directory name comprised in the target directory-file combination, the first target index entry and the query statement meet all or part of the following:
first position information comprised in the first target index entry is consistent with a position of the file name in the query statement, wherein the first position information is a position of the file name in a path of the target file; and
second position information comprised in the first target index entry is consistent with a position of the directory name in the query statement, wherein the second position information is a position of the directory name in the path of the target file; and
if the first target index comprises an identifier of a target directory, the identifier of the query target is the identifier of the target directory, and for a file name or a directory name comprised in the target directory-file combination, the first target index entry and the query statement meet all or part of the following:
third position information comprised in the first target index entry is consistent with a position of the file name in the query statement, wherein the first position information is a position of the file name in a path of the target directory; and
fourth position information comprised in the first target index entry is consistent with a position of the directory name in the query statement, wherein the fourth position information is a position of the directory name in the path of the target directory.

18. The apparatus according to claim 11, wherein the index module is configured to:
query an inverted list based on the query statement to determine inverted lists corresponding to words in the query statement;
determine, based on the inverted lists corresponding to the words, candidate targets comprised in all the inverted lists corresponding to the words; and
determine the query target from the candidate targets based on positions, in the query statement, of the words in the query statement and positions, in the candidate targets, of the words recorded in the inverted lists corresponding to the words.

19. The apparatus according to claim 18, wherein for a word in the query statement, the query target meets the following:
a position of the word in the query statement is the same as a position, in the query target, of the word recorded in the inverted list corresponding to the word.

20. The apparatus according to any one of claims 11 to 19, wherein the index module is further configured to:
determine that the query statement meets all or part of the following:
an occurrence frequency, in the query statement, of a word in the query statement is not greater than a maximum occurrence frequency of the word;
a length of the query statement is not greater than a maximum length of data in a file or a maximum length of a path; and
a position of the word in the query statement is consistent with a preset position of the word.

21. A compute device, wherein the compute device comprises a processor and a storage, wherein
the storage is configured to store computer program instructions; and
the processor executes and invokes the computer program instructions in the storage to perform the method according to any one of claims 1 to 10.

22. A computer-readable storage medium, wherein when the computer-readable storage medium is executed by a compute device, the compute device performs the method according to any one of claims 1 to 10.
